# EUROPEAN PATENT APPLICATION

(11) **EP 4 379 595 A1**
(43) Date of publication of application: **05.06.2024**
(21) Application number: 22860195.1
(22) Date of filing: 02.08.2022
(51) Int. Cl.: G06F 30/27, G06N 3/00, G06N 20/00

(54) **DEVICE CONTROL METHOD AND APPARATUS, ELECTRONIC DEVICE, AND STORAGE MEDIUM**

(30) Priority: 27.08.2021 CN 202110994389
(71) Applicant: ZTE Corporation, Shenzhen, Guangdong 518057 (CN)
(72) Inventor: XIONG, Yong, Shenzhen, Guangdong 518057 (CN); WANG, Yong, Shenzhen, Guangdong 518057 (CN); CHEN, Yong, Shenzhen, Guangdong 518057 (CN); XIAO, Shengxian, Shenzhen, Guangdong 518057 (CN); ZHANG, Dedi, Shenzhen, Guangdong 518057 (CN)
(74) Representative: Boult Wade Tennant LLP
(86) International application number: PCT/CN2022/109817
(87) International publication number: WO 2023/024849

(57) **Abstract**

The present application relates to the technical field of communications, and provides a device control method and apparatus, an electronic device, and a storage medium. The method includes: after detecting that a device accesses a first system, acquiring system information of the first system and system information of a second system recorded by the device (101), wherein the second system is a system that the device has accessed before accessing the first system; inputting the system information of the first system and the system information of the second system to a pre-trained learning model to obtain a result indicating whether the first system and the second system are the same system (102), the system information including N categories of information, and N being an integer greater than 1; and if the first system and the second system are not the same system, controlling the device to lock output (103).

## Description

### TECHNICAL FIELD

The present application relates to the field of communication technology, and particularly relates to a device control method and apparatus, an electronic device and a storage medium.

### BACKGROUND

The value of devices such as batteries, power supply cables, and rectifiers in communication power supplies continues to be increased as the communication power supply technology continuously develops, and global operators are beginning to face a very serious difficulty in the problem that the device is stolen.

The basic idea for technicians to solve the problem that the device is stolen is generally to lock the output after the device is detected to be stolen so that the device can no longer be utilized to reduce the stealing value and then alleviate the problem that the device is stolen. With respect to detecting whether a device is stolen, the idea currently proposed is as follows: a GPS (Global Positioning System) is provided in the device, and the initial geographical position of the device is set when the device is started at the very beginning, so that it is considered that the device is stolen as soon as a change in the current geographical position is detected, and the device is controlled to lock the output at the moment.

However, the provision of GPS in the device greatly increases the hardware cost of the device, and the provision of GPS in a device such as a rectifier also presents considerable technical difficulties, such as the need to consider the influence between an electromagnetic arrangement and an air duct, and the installation of an antenna.

### SUMMARY

An embodiment of the present application provides a device control method, including: acquiring system information of a first system and system information of a second system recorded by a device after detecting that the device accesses the first system, wherein the second system is a system that the device has accessed before accessing the first system; inputting the system information of the first system and the system information of the second system into a pre-trained learning model to obtain a result indicating whether the first system and the second system are the same system, wherein the system information includes N categories of information, and N is an integer greater than 1; and controlling the device to lock output if the first system and the second system are not the same system.

An embodiment of the present application further provides a device control apparatus, including: an acquisition module, an input module and a control module; the acquisition module is configured to acquire system information of a first system and system information of a second system recorded by a device after detecting that the device accesses the first system, wherein the second system is a system that the device has accessed before accessing the first system; the input module is configured to input the system information of the first system and the system information of the second system into a pre-trained learning model to obtain a result indicating whether the first system and the second system are the same system, wherein the system information includes N categories of information, and N is an integer greater than 1; and the control module is configured to control the device to lock output if the first system and the second system are not the same system.

An embodiment of the present application further provides an electronic device including: at least one processor; and a memory in communication connection with the at least one processor; wherein the memory stores instructions executable by the at least one processor, and the instructions are executed by the at least one processor such that the at least one processor can perform the above device control method.

An embodiment of the present application further provides a computer-readable storage medium storing a computer program which, when executed by a processor, implements the above device control method.

### BRIEF DESCRIPTION OF THE DRAWINGS

FIG. 1 is a specific flowchart I of a device control method according to an embodiment of the present application;
FIG. 2 is a specific flowchart II of a device control method according to an embodiment of the present application;
FIG. 3 is a block diagram of a power supply system according to an embodiment of the present application;
FIG. 4 is a block diagram of a configuration composition model according to an embodiment of the present application;
FIG. 5 is a block diagram of a structural model according to an embodiment of the present application;
FIG. 6 is a block diagram of a process model according to an embodiment of the present application;
FIG. 7 is a block diagram of a basic configuration model according to an embodiment of the present application;
FIG. 8 is a block diagram of a version model according to an embodiment of the present application;
FIG. 9 is a block diagram of a summarization model according to an embodiment of the present application;

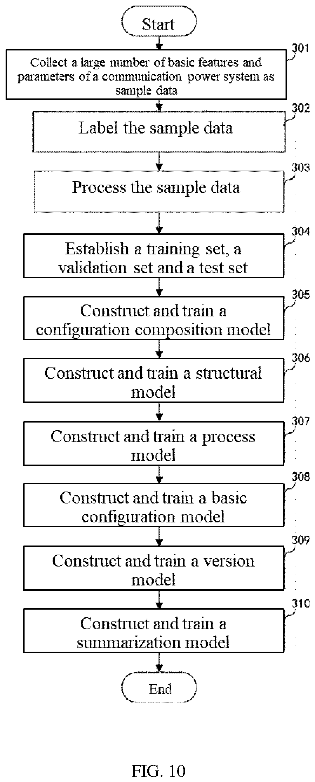

FIG. 10 is a specific flowchart of constructing and training learning models according to an embodiment of the present application;
FIG. 11 is a specific flowchart III of a device control method according to an embodiment of the present application;
FIG. 12 is a block diagram of a device control apparatus according to an embodiment of the present application; and
FIG. 13 is a block diagram of an electronic device according to an embodiment of the present application.

### DETAILED DESCRIPTION

The main objectives of the embodiments of the present application are to provide a device control method and apparatus, an electronic device and a storage medium, and to provide a method for detecting whether a device is stolen by identifying whether a scenario is changed without additionally setting hardware, thereby overcoming technical difficulties caused by setting hardware.

In order to make the objectives, technical solutions and advantages of the embodiments of the present application clearer, various embodiments of the present application will be described in detail below in combination with the accompanying drawings. However, those of ordinary skill in the art may appreciate that numerous technical details are set forth in the various embodiments of the present application in order to make the readers better understand the present application. However, the technical solutions claimed in the present application can be implemented based on various variations and modifications of the following embodiments even without these technical details. The following division of the various embodiments is for the convenience of description and should not be construed as limiting the specific implementations of the present application, and the various embodiments may be combined with each other and may refer to each other in conjunction with each other without contradiction.

An embodiment of the present application relates to a device control method that is configured to identify whether a device is currently stolen by identifying whether a first system which is currently accessed by the device coincides with a second system which is initially accessed by the device, and to control the device to lock output when it is determined that the device has been stolen, thereby reducing the stealing value, and further alleviating the problem the device is stolen.

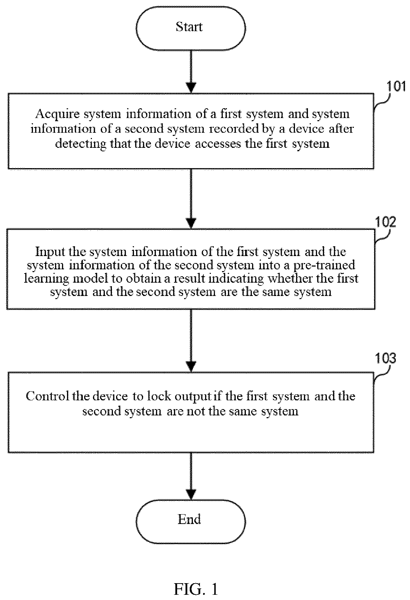

A specific flow of the device control method in this embodiment is as shown in FIG. 1.

At step 101, system information of a first system and system information of a second system recorded by a device are acquired after the device is detected to access the first system.

At step 102, the system information of the first system and the system information of the second system are input into a pre-trained learning model to obtain a result indicating whether the first system and the second system are the same system.

At step 103, The device is controlled to lock output if the first system and the second system are not the same system.

In this embodiment, if the device once accessed the second system before accessing the first system, the device records the system information of the second system, and the first system stores the system information of the first system. The system information includes a plurality of categories of information, and the system information of the first system and the system information of the second system need to be input into the pre-trained learning model after the device is detected to access the first system, so that whether the first system and the second system are the same system are determined comprehensively based on the plurality of categories of information. When it is determined that the first system and the second system are not the same system, the device is considered to have been stolen, and the device is controlled to lock output at the moment, so that the device can no longer be used normally to reduce the stealing value, thereby alleviating the problem that the device is stolen. According to the embodiment of the present application, compared with the technical solution that a GPS is provided in the device, whether the system which is currently accessed by the device is changed is determined comprehensively by software only according to the system information of the system accessed, and the device is controlled to lock the output when it is determined that the system accessed is changed, so that whether the device is stolen is detected without additionally setting hardware, thereby greatly reducing the hardware cost of the device. Moreover, software is easier to implement than hardware, and overcomes the technical difficulties of the hardware at present.

In an embodiment, the first system and the second system are both power supply systems, and the device is any one of a rectifier, an inverter, an uninterruptible power supply, and a DC/DC system.

In order to solve the problem that the device is stolen, an embodiment of the present application considers a daily life scenario. Assuming that a student who has taken a leave of absence returns to the school, the student finds that teachers and classmates inside a classroom are all very unfamiliar when passing by the classroom, it can be determined that the student does not belong to this group probably at this point. This is a social psychology example that is very similar to the situation of a change in a power supply system (scenario change) after a rectifier is stolen.

Based on this social psychology example, it may be considered to reduce the stealing value and alleviate the problem that the device is stolen by allowing the device to automatically identify whether the scenario is changed through machine learning or the like, and by disabling the device through locking after it is determined that the change occurs.

In the group theory, a group, which is the research object of social psychology, has the following basic features and parameters:
1) a group composition including members making up the group.
2) a group structure including a communication structure, an authority structure (e.g., the relationship between leaders and followers), a propensity structure, an emotional structure, an interpersonal structure, etc., and further including an activity structure of the group if the group is considered to be a subject engaged in a common activity, i.e., further including the functional assignment of the members of the group in the common activity.
3) a group process including various process events that occur in the group, i.e., the dynamic manifestation of interpersonal relationships in the group.
4) group values and norms including behavioral criteria and guidelines that the group and its members believe should be observed, etc., and further including a group sanction system by which the group norms are guaranteed to be consistently observed and fulfilled by the members.
And 5) the development level of the group.

In an embodiment, since social psychology generally performs analytical investigations on the group from the above five aspects, based on this, the step of identifying whether the scenario in which the device is located is changed, and further, determining whether the device is stolen can be modeled with reference to these five basic features and parameters. The software is thus used to implement identification of the application scenarios, without additionally setting hardware to detect whether the device is stolen, so that the hardware cost of the device is greatly reduced. Moreover, software is easier to implement than hardware, overcoming the technical difficulties of the hardware at present.

The description below is made by an example that the first system and the second system are power supply systems, and the device is a rectifier.

When the rectifier initially accesses the second system, a supervision unit of the second system acquires and records basic features, parameter information and the like of the second system as system information of the second system. Specifically, the system information may be stored in a non-volatile memory such as EEPROM/FLASH, and the various recorded information may be transmitted to components of the accessed system via a communication protocol, and is received and recorded by the rectifier.

During operation of the second system, if the basic features and parameter information of the second system are changed, or major events such as component replacement, version upgrade, and safety accident occur, for example, feature and parameter change, such as a change of the battery configuration capacity from 100Ah to 150Ah in the second system; alternatively, a significant event such as rectifier replacement, AC power distribution software upgrade, and a fire and stealing event, occurs in the second system, , the supervision unit in the second system refreshes the stored system information of the second system, and meanwhile informs respective accessing rectifiers to synchronously refresh and save records.

When the rectifier accesses the first system, the first system may acquire system information of the first system and the system information of the second system recorded by the rectifier, wherein the system information of the second system indicates a scenario of the second system, and the system information of the first system indicates a scenario of the first system. Since the system information generally includes N categories of information, in order to comprehensively determine whether the first system is the second system, in this embodiment the system information of the first system and the system information of the second system are input into the pre-trained learning model to obtain the result indicating whether the first system and the second system are the same system. When it is determined that the first system and the second system are not the same system, the rectifier is considered to be stolen, and the rectifier is controlled to lock output at the moment, and the rectifier may also be configured to emit an alarm signal.

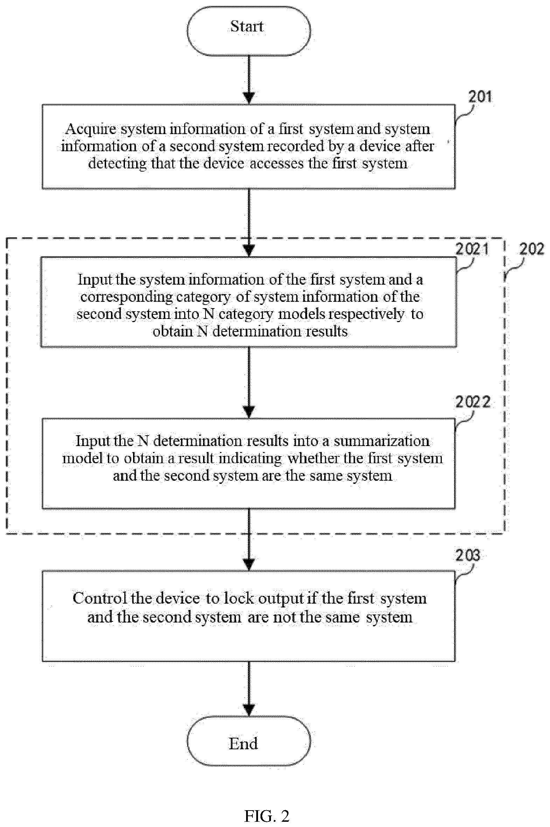

In an embodiment, the learning model includes N category models and a summarization model. The N category models are in one-to-one correspondence with the N categories. Referring to FIG. 2, step 201 and step 203 are substantially the same as step 101 and step 103, and will not be described in detail herein, except that the difference that step 202 includes sub-step 2021 and sub-step 2022.

At sub-step 2021, the system information of the first system and the system information in corresponding categories of the second system are input into the N category models respectively to obtain N determination results.

At sub-step 2022, the N determination results are input into the summarization model to obtain the result indicating whether the first system and the second system are the same system.

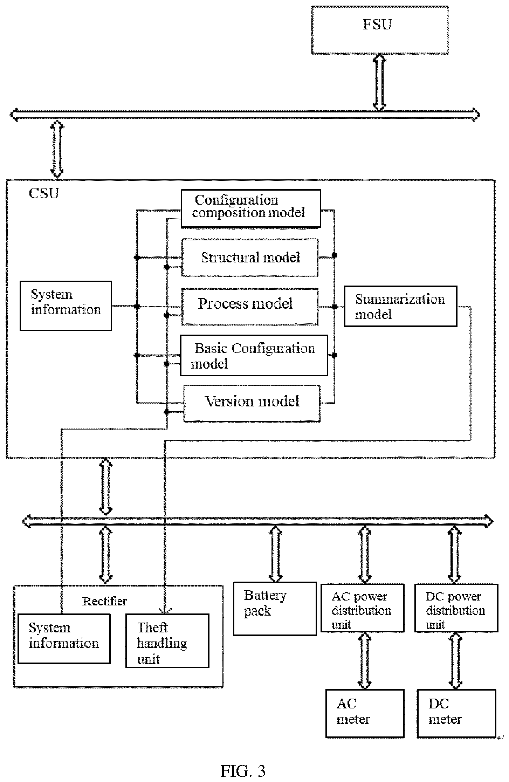

A power supply system is taken as an example. Referring to FIG. 3, core components of the power supply system include a communication power supply center supervision unit (CSU), a smart rectifier, a lithium battery pack, and the like. Optionally, the power supply system may further include an AC power distribution unit, a DC power distribution unit, an AC/DC meter, other environment detection units, etc. Data interaction between the components is performed through a communication network. Specifically, a computer room field supervision unit (FSU) monitors data between the respective systems, and specifically implements data interaction with the CSU through the communication network. The CSU also performs data interaction with the rectifier, the battery pack, the AC power distribution unit, the DC power distribution unit, the AC meter, and the DC meter through the communication network.

In an embodiment, referring to FIG. 3, the N category models may include any one of or any combination of a configuration composition model, a structural model, a process model, a basic configuration model, and a version model.

The configuration composition model may, according to a configuration composition of each component in the system information, obtain a result indicating whether a configuration composition of the first system matches a configuration composition of the second system to serve as the determination result.

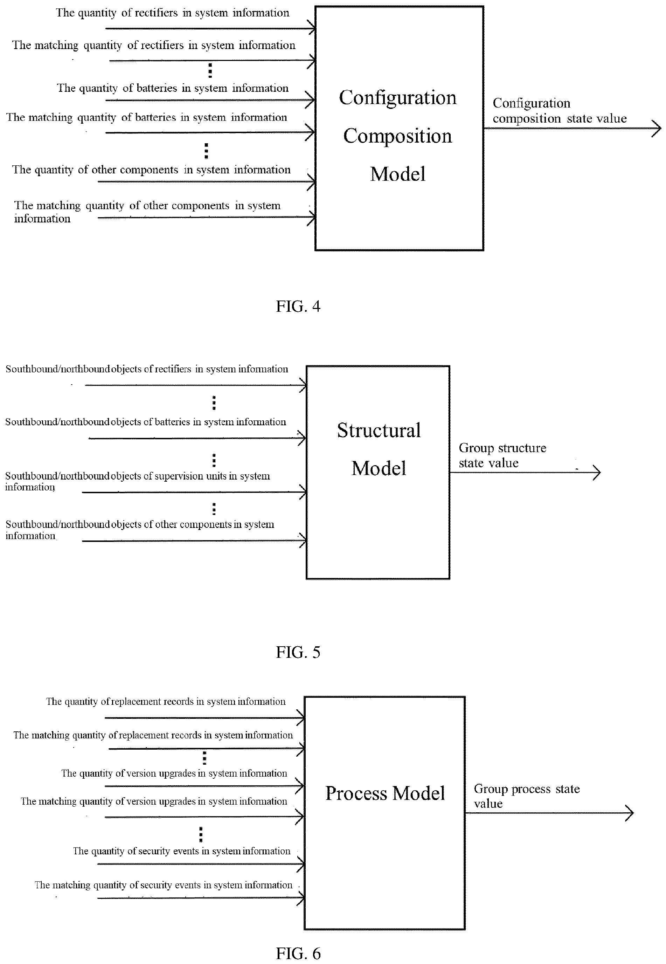

In an example that the first system and the second system are power supply systems, referring to a schematic diagram of input and output of the configuration composition model in FIG. 4, input parameters of the configuration composition model include the quantity of the rectifiers, the batteries, and the components and matching quantity of the same in the system information. The system information includes the system information of the first system and the system information of the second system. The determination result is a configuration composition state value, wherein "0" represents unchanged, and "1" represents changed.

The structural model may, according to a southbound/northbound object of each component in the system information, obtain a result indicating whether a southbound/northbound object of the first system match a southbound/northbound object of the second system to serve as the determination result.

In an example that the first system and the second system are power supply systems, referring to a schematic diagram of input and output of the structural model in FIG. 5, input parameters of the structural model include southbound/northbound objects of the rectifier, the battery, the supervision unit, and each component in the system information. The system information includes the system information of the first system and the system information of the second system. The determination result is a group structure state value, wherein "0" represents unchanged, and "1" represents changed.

The process model may, according to a set of events occurring to each component in the system information, obtain a result indicating whether a set of events of the first system matches a set of events of the second system to serve as the determination result.

In an example that the first system and the second system are power supply systems, referring to a schematic diagram of input and output of the process model in FIG. 6, input parameters of the process model include: the quantity and the matching quantity of changing records, the quantity and the matching quantity of version upgrades, as well as the quantity and the matching quantity of security events in the system information. The system information includes the system information of the first system and the system information of the second system. The determination result is a group process state value, wherein "0" represents unchanged, and "1" represents changed.

The basic configuration model may, according to basic configuration parameters of each component in the system information, obtain a result indicating whether basic configuration parameters of the first system match basic configuration parameters of the second system to serve as the determination result.

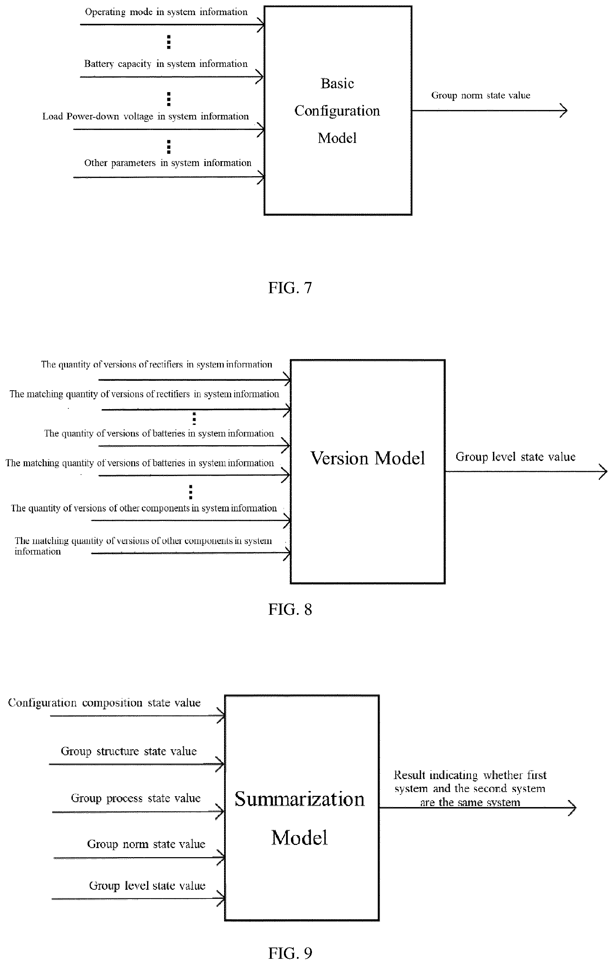

In an example that the first system and the second system are power supply systems, referring to a schematic diagram of input and output of the basic configuration model in FIG. 7, input parameters of the basic configuration model include an operating mode/battery capacity/load power-down voltage and other parameter values for other required references in the system information. The system information includes the system information of the first system and the system information of the second system. The determination result is a group norm state value, wherein "0" represents unchanged, and "1" represents changed.

The version model may, according to version parameters of each component in the system information, obtain a result indicating whether version parameters of the first system match version parameters of the second system to serve as the determination result.

In an example that the first system and the second system are power supply systems, referring to a schematic diagram of input and output of the version model in FIG. 8, input parameters of the version model include: the quantity and the matching quantity of versions of rectifiers/batteries and components in the system information. The system information includes the system information of the first system and the system information of the second system. The determination result is a group level state value, wherein "0" represents unchanged, and "1" represents changed.

After the determination results output by the N category models are obtained, these determination results are input into the summarization module. Referring to a schematic diagram of input and output of the summarization module in FIG. 9, input parameters of the summarization model include the determination results output by the N category models. In an embodiment, the determination results are the configuration composition state value, the group structure state value, the group process state value, the group norm state value, and the group level state value respectively, and an output parameter is a result indicating whether the first system and the second system are the same system, wherein "0" represents unchanged, and "1" represents changed.

In this embodiment, the N category models are specifically defined, and the information determined by the N category models is different dimensions of information from the system, respectively. The larger the quantity of the category models deployed, the more accurate the result obtained by comprehensive determination. Herein, the configuration composition of each component is a service provisioning quantity, a record quantity, a matching quantity or the like of each component. The southbound/northbound object of each component is connection relationship between the individual components. The set of events occurring to each component includes a set of events such as component replacement, version upgrade and security accidents that have occurred to each component in the system. The basic configuration parameters of each component include the operating mode, the battery capacity, the over-temperature protection point and the over-voltage protection point of each component in the system. The version parameters of each component include the version state of each component in the system.

In an embodiment, the learning model needs to be constructed and trained before the system information of the first system and the system information of the second system are input into the pre-trained learning model. The learning model may be a machine learning model or a deep learning model. In an embodiment, the machine learning model is used as a learning model, and use of the machine learning model consumes less resources than models such as the deep learning model, so that the device control method may have a wider applicable range.

Specifically, the configuration composition model, the structural model, the process model, the basic configuration model, the version model and the summarization model may be constructed and trained in advance, and the trained configuration composition model, structural model, process model, basic configuration model, version model and summarization model are used as the learning model. The learning model may be constructed and trained in a device. For example, a learning model may be constructed and trained in a rectifier, or learning models may be constructed and trained in monitoring systems of the first system and the second system respectively if the resources of the device are insufficient.

The steps of constructing and training a learning model in the first system specifically refer to the flowchart 10, and the method for constructing and training a learning model in the second system or the rectifier is performed in a similar way, and will not be described in detail below.

At step 301, a large number of basic features and parameters of a communication power system are collected as sample data.

The technicians first need to construct and train each learning model in a monitoring system of the first system. Specifically, the technician will collect a large number of basic features and parameters of the communication power system as sample data, and the sample data includes all possible application scenarios for a rectifier, including scenarios in which the rectifier is in a DC computer room core network power supply, in a macro cell rack, in an embedded power supply, in a micro cell embedded power supply, in a wall-mounted power supply, etc. The sample data can be quickly and automatically generated via the configuration of tool software.

Sample data for group composition is taken as an example for illustration. Assuming that the communication power supply system is applied to the scenario of a 100A wall-mounted power supply, the configured quantities of the rectifier, the battery, the supervision unit, the AC power distribution and the DC power distribution may be 2, 1, 1, 0 and 0, respectively, while the quantity thereof in actual operation may be 2, 1, 1, 0, 0. Assuming that the communication power supply system is applied to the scenario of a 300A embedded power supply, the configured quantities of the rectifier, the battery, the supervision unit, the AC power distribution unit and the DC power distribution unit may be 6, 2, 1, 0, 0, respectively, while the quantities thereof in actual operation may be 5, 2, 1, 0, 0 or 4, 2, 1, 0, 0. Assuming that the communication power supply system is applied to the scenario of a 2000A core network power supply, the configured quantities of the rectifier, the battery, the supervision unit, the AC power distribution unit and the DC power distribution unit may be 40, 4, 2, 1, 1, respectively, while the quantities thereof in actual operation may be 30∼40, 2∼4, 2, 1, 1, respectively. Obviously, sample data can be used as long as the sample data is logically consistent with what is actually likely to happen, and therefore, it is fully possible to automatically generate sample data in large quantity and quickly by means of tool software.

At step 302, the sample data is labeled.

Specifically, tags may be set to include the following two conditions: "0"-scenario unchanged; "1"-scenario changed. The sample data can be labeled either manually or automatically by tool software according to certain rules.

At step 303, the sample data are processed.

Specifically, a formula may be adopted to normalize the sample data such that all the processed data is between (0, 1), wherein Xreal is a true value of an actual sample, X* is normalized data, Xmax is a maximum value or an upper limit value of a corresponding category of data sample, and Xmin is a minimum value or a lower limit value of a corresponding category of data sample.

For example, if the service provisioning quantity of the rectifier is 11, and it is assumed that the range of the service provisioning quantity of the rectifier is 0~100, the service provisioning quantity 11 of the rectifiers, is normalized to be equal to 0.11. For another example, an ID value between (0, 1) can be simply defined for each of the southbound/northbound objects of the components such as the rectifier, the battery, the supervision unit, the AC power distribution and the DC power distribution, e.g., the FSU is defined as 1.0, the supervision unit is defined as 0.9, the DC power distribution unit is defined as 0.8, the battery is defined as 0.7, the rectifier is defined as 0.6, etc. If the northbound object of the supervision unit is FSU, the northbound object may be denoted as {1.0}, and if the southbound object of the supervision unit includes the battery and the rectifier, the southbound object may be denoted as {0.7, 0.6}.

At step 304, a training set, a validation set and a test set are established.

Specifically, the training set, the validation set and the test set can be established according to a ratio of 6:2:2. Firstly, the model needs to be trained through the training set first, so that a greater amount of sample data are required. After the model is trained well through the training set, the validation set with a smaller amount of data may be used to validate the trained model. Then, the test set with a smaller amount of data can be used to test and calibrate the trained model.

At step 305, the configuration composition model is constructed and trained.

Specifically, corresponding to the first point in the above group theory (the group composition), the group composition model is constructed and trained. Input parameters of the configuration composition model include the configuration compositions of the respective components in the first system and the second system, and an output parameter of the configuration composition model is configuration composition unchanged or configuration composition changed. The configuration composition model is trained by using training data including the training set, the validation set, and the test set.

At step 306, the structural model is constructed and trained.

Specifically, corresponding to the second point of the above group theory (the group structure), the group structure model is constructed and trained. Input parameters of the structural model include the southbound/northbound objects of the respective components in the first system and the second system, and an output parameter of the structural model is southbound/northbound object unchanged or southbound/northbound object changed. The structural model is trained using training data including the training set, the validation set, and the test set.

At step 307, the process model is constructed and trained.

Specifically, corresponding to the third point in the above group theory (the group process), the group process model is constructed and trained. Input parameters of the process model include a set of events occurring to each component in the first system and the second system, such as component replacement, version upgrade and safety time, and an output parameter of the process model is the set of events unchanged or the set of events changed. The process model is trained using training data including the training set, the validation set and the test set.

At step 308, the basic configuration model is constructed and trained.

Specifically, corresponding to the fourth point in the above group theory (the group values and norms),the group norm model is constructed and trained. Input parameters of the basic configuration model include basic configuration parameters of each component in the first system and the second system, such as an operating mode, a battery capacity, an over-temperature protection point and an over-voltage protection point, and an output parameter of the basic configuration model is basic configuration parameters unchanged or changed. The basic configuration model is trained using training data including the training set, the validation set and the test set.

At step 309, the version model is constructed and trained.

Specifically, corresponding to the fifth point in the above theory (the development level of the group), the group level model is constructed and trained. Input parameters of the version model include version parameters of each component in the first system and the second system, and an output parameter of the version model is basic configuration parameters unchanged or changed. The version model is trained using training data including the training set, the validation set and the test set.

It should be emphasized that the order of steps 305 to 309 is not limited here, and some of the models from the configuration composition model to the version model may be constructed and trained simultaneously to improve the deployment efficiency.

At step 310, the summarization model is constructed and trained.

Specifically, referring to the schematic diagram of the input and output of the summarization model in FIG. 9, input parameters of the summarization model are determination results output from the configuration composition model to the version model, respectively, and an output parameter of the summarization model is the result indicating whether the first system and the second system are the same system, and may also be understood as the result indicating whether the device has ever belonged to the first system, The summarization model is then trained using training data including the training set, the validation set, and the test set.

In an embodiment, one or more of the above six learning models may optionally be deployed according to the actual circumstances.

After N+1 trained learning models are constructed and deployed, the above device control method may be applied to the device if the learning models are all deployed on the device, may be applied to the first system if the learning models are all deployed on the first system, or may be performed by either the device or the first system if the learning models are deployed in the device and the first system.

In an embodiment, reference is made to a flowchart 11. Step 402 is substantially the same as step 102 and will not be repeated here.

At sub-step 4011, whether the pre-trained learning model is deployed on the device is determined after the device is detected to access the first system, and if so, sub-step 4012 is performed, otherwise sub-step 4013 is performed.

At sub-step 4012, the system information of the first system transmitted by the first system is received, and the system information of the second system stored in the device is acquired.

At sub-step 4013, the system information of the second system is transmitted to the first system so as to enable the first system to receive the system information of the second system, and acquire the system information of the first system stored in the first system.

At step 403, if the first system and the second system are not the same system, an enable signal is output to a theft handling unit in the device to enable the theft handling unit to control the device to lock output.

Specifically, the device, after accessing the first system, may output normally for a short period of time, for example, for 5 minutes. In this process, the device determines whether the pre-trained learning model is deployed on the device. If the pre-trained learning model is deployed on the device, the system information of the first system is acquired from the first system, and the acquired system information of the first system and the system information of the second system are input into the learning model together for comprehensive determination. If the pre-trained learning model is not deployed on the device, the learning model is considered to be deployed on the first system, and the device transmits the system information of the second system to the first system at the moment, so that the first system inputs the acquired system information of the second system and the system information of the first system together into the learning model for comprehensive determination.

Fig. 3 illustrates an example of deploying trained learning models in the supervision unit of the first system. The supervision unit acquires the system information of the second system recorded by the rectifier; inputs the system information of the first system and the second system into the configuration composition model, the structural model, the process model, the basic configuration model and the version model, respectively; further inputs the determination results obtained from the five models to the summarization model to obtain the result of whether the rectifier has ever belonged to the first system; and then inputs the result to the theft handling unit of the rectifier. If the rectifier has ever belonged to the first system, the rectifier continues to output normally; if the rectifier has not belonged to the first system, the rectifier is considered to have been stolen and the theft handling unit controls the rectifier to lock output.

In an embodiment, different information is input into the trained configuration composition model, structural model, process model, basic configuration model and version model, respectively. For example, the configuration composition of each component of the first system in the current system information is input into the configuration composition model, and the configuration composition of each component of the second system in the system information is recorded; the southbound/northbound object of each component of the first system in the current system information is input into the structural model, and the southbound/northbound object of each component of the second system in the system information is recorded; the set of events occurring to each component of the first system in the current system information is input into the process model, and the set of events occurring to each component of the second system in the system information is recorded; the basic configuration parameters of each component of the first system in the current system information is input into the basic configuration model, and the basic configuration parameters of each component of the second system in the system information is recorded; and the version parameters of each component of the first system in the current system information are input into the version model, and the version parameters of each component of the second system in the system information are recorded. The determination results output from the configuration composition model, the structural model, the process model, the basic configuration model and the version model are input into the summarization model to comprehensively determine whether the first system and the second system belong to the same system, and it may be understood that whether the device has ever belonged to the first system is determined. If it is determined that the device has ever belonged to the first system, the device maintains a normal operating state; and if it is determined that the device has not belonged to the first system, it is considered that the device is stolen, the device is controlled to block the output at the moment, and a rectifier may be provided to send an alarm signal at the moment.

Obviously, the more complex first system and second system enables sub-components such as the rectifier, battery and DC/AC power distribution units included therein to have a greater quantity and enable the basic features and parameters of the group to be larger in amount and more significant, which in turns effectively improves the correctness of feature recognition and scenario recognition of the rectifier.

In general, since the devices such as the rectifier are prone to damage, operators usually buy more rectifiers and other devices as spare parts to facilitate timely replacement, thereby ensuring safe power supply. Obviously, these spare parts are also at risk of being stolen.

In an embodiment, when a communication power supply of a certain station begins to be used, all spare rectifiers may be inserted one by one into a slot with the least probability of use (such as the last slot). The rectifiers undergo the operations such as the aforementioned device accessing the second system sequentially, such that all the spare rectifiers record and store the basic features and parameter information of the currently accessed power supply system, and then the spare rectifiers are removed from the currently accessed power supply system for storage. When these spare rectifiers are resold and are plugged into other power systems or powered up by competitor manufacturers, the rectifiers can automatically identify that the scenario has changed, thereby reducing the stealing value by locking the output, and further mitigating the problem the device is stolen.

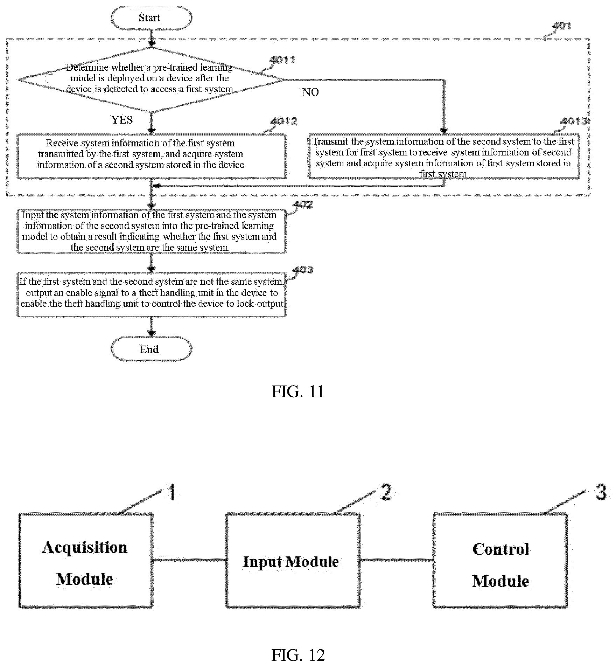

An embodiment of the present application relates to a device control apparatus. Referring to FIG. 12, the device control apparatus includes: an acquisition module 1, an input module 2, and a control module 3. The acquisition module 1 is connected to the input module 2, and the input module 2 is connected to the control module 3.

The acquisition module 1 acquires system information of a first system and system information of a second system recorded by a device after the device is detected to access the first system, wherein the second system is a system that the device has accessed before accessing the first system. The input module 2 may input the system information of the first system and the system information of the second system to a pre-trained learning model to obtain a result indicating whether the first system and the second system are the same system, wherein the system information includes N categories of information, and N is an integer greater than 1. The control module 3 controls the device to lock output when it is determined that the first system and the second system are not the same system.

It should be appreciated that this embodiment is an apparatus embodiment corresponding to the above method embodiments, and this embodiment can be implemented in cooperation with the above method embodiments. The relevant technical details mentioned in the above method embodiments are still valid in this embodiment, and will not be repeated here in order to reduce repetition. Correspondingly, the relevant technical details mentioned in this embodiment are also applicable in the above method embodiments.

It is worth mentioning that the modules mentioned in this embodiment are logical modules. In practical applications, a logical unit may be a physical unit, may also be a part of a physical unit, or a combination of a plurality of physical units. In addition, in order to highlight the innovative part of the present application, the units that are less closely related to solving the technical problems proposed by the present application are not introduced in this embodiment, but this does not indicate that other units are not present in this embodiment.

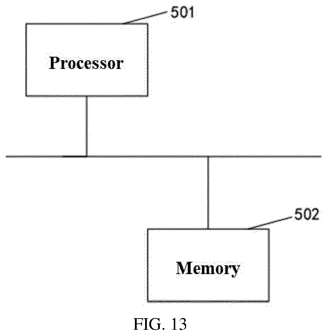

An embodiment of the present application relates to a device, as shown in FIG. 13, including: at least one processor 501; and a memory 502 in communication connection with the at least one processor 501, wherein the memory 502 stores instructions executable by the at least one processor 501, and the instructions are executed by the at least one processor 501 such that the at least one processor 501 may perform the above device control method.

The memory and the processor are connected through a bus. The bus may include any number of interconnected buses and bridges, and the bus connects various circuits of one or more processors and the memory together. The bus may also connect various other circuits, such as peripheral devices, voltage regulators and power management circuits, which are well known in the art, and therefore, will not be further described here. A bus interface provides an interface between the bus and a transceiver. The transceiver may be an element or a plurality of elements, such as a plurality of receivers and transmitters, and provides a unit in communication with various other apparatuses over a transmission medium. The data processed by the processor is transmitted over the wireless medium through an antenna, and further the antenna receives the data and transmits the data to the processor.

The processor is responsible for managing the bus and general processing, and may also provide various functions including timing, peripheral interface, voltage regulation, power management and other control functions. The memory may be configured to store data used by the processor in performing operations.

An embodiment of the present application relates to a computer-readable storage medium storing a computer program. The computer program, when executed by the processor, implements the above method embodiment.

That is, it can be understood by those skilled in the art that, the implementation of all or part of the steps in the above method embodiment may be performed by instructing related hardware via a program. The program is stored in a storage medium and includes a plurality of instructions for enabling a device (which may be a single chip microcomputer, a chip, etc.) or a processor to execute all or part of the steps of the method according to the various embodiments of the present application. The aforementioned storage medium includes various media in which program codes can be stored, such as a USB flash disk, a mobile hard disk, a read-only memory (ROM), a random access memory (RAM), a magnetic disk, or an optical disk.

It will be understood by those of ordinary skill in the art that the above embodiments are specific embodiments for implementing the present application, and in practice, various changes in forms and details may be made therein without departing from the spirit and scope of the present application.

## Claims

1. A device control method, comprising:
acquiring system information of a first system and system information of a second system recorded by a device after detecting that the device accesses the first system, wherein the second system is a system that the device has accessed before accessing the first system;
inputting the system information of the first system and the system information of the second system into a pre-trained learning model to obtain a result indicating whether the first system and the second system are the same system, wherein the system information comprises N categories of information, and N is an integer greater than 1; and
controlling the device to lock output in the case that the first system and the second system are not the same system.

2. The device control method according to claim 1, wherein the learning model comprises N category models and a summarization model; the N category models are in one-to-one correspondence with N categories;
inputting the system information of the first system and the system information of the second system to the pre-trained learning model to obtain the result indicating whether the first system and the second system are the same system, comprises:
inputting the system information of the first system and system information in corresponding categories of the second system into the N category models respectively to obtain N determination results; and
inputting the N determination results into the summarization model to obtain the result indicating whether the first system and the second system are the same system.

3. The device control method according to claim 2, wherein the N category models comprise any one of or any combination of:
a configuration composition model, configured to obtain, according to a configuration composition of each component in the system information, a result indicating whether a configuration composition of the first system matches a configuration composition of the second system to serve as the determination result;
a structural model, configured to obtain, according to a southbound/northbound object of each component in the system information, a result indicating whether a southbound/northbound object of the first system matches a southbound/northbound object of the second system to serve as the determination result;
a process model, configured to obtain, according to a set of events occurring to each component in the system information, a result indicating whether a set of events of the first system matches a set of events of the second system to serve as the determination result;
a basic configuration model, configured to obtain, according to basic configuration parameters of each component in the system information, a result indicating whether basic configuration parameters of the first system match basic configuration parameters of the second system to serve as the determination result; and
a version model, configured to obtain, according to version parameters of each component in the system information, a result indicating whether version parameters of the first system match version parameters of the second system to serve as the determination result.

4. The device control method according to any one of claims 1-3, wherein the method is applied to the device;
acquiring the system information of the first system and the system information of the second system recorded by the device, comprises:
receiving the system information of the first system transmitted by the first system, and acquiring the system information of the second system stored in the device.

5. The device control method according to any one of claims 1-4, wherein the method is applied to a supervision unit in the first system;
acquiring the system information of the first system and the system information of the second system recorded by the device, comprises:
receiving the system information of the second system transmitted by the device, and acquiring the system information of the first system stored in the first system;
controlling the device to lock output, comprises:
outputting an enable signal to a theft handling unit in the device to enable the theft handling unit to control the device to lock output.

6. The device control method according to any one of claims 1-5, wherein the learning model is a machine learning model.

7. The device control method according to any one of claims 1-6, wherein the first system and the second system are both power supply systems, and the device is any one of a rectifier, an inverter, an uninterruptible power supply, and a DC/DC system.

8. A device control apparatus, comprising: an acquisition module, an input module and a control module, wherein
the acquisition module is configured to acquire system information of a first system and system information of a second system recorded by a device after detecting that the device accesses the first system, wherein the second system is a system that the device has accessed before accessing the first system;
the input module is configured to input the system information of the first system and the system information of the second system into a pre-trained learning model to obtain a result indicating whether the first system and the second system are the same system, wherein the system information comprises N categories of information, and N is an integer greater than 1; and
the control module is configured to control the device to lock output in the case that the first system and the second system are not the same system.

9. An electronic device, comprising:
at least one processor; and
a memory in communication connection with the at least one processor, wherein
the memory stores instructions executable by the at least one processor, and the instructions are executed by the at least one processor such that the at least one processor may perform the device control method of any one of claims 1-7.

10. A computer-readable storage medium, storing a computer program which, when executed by a processor, implements the device control method of any one of claims 1-7.
